(19) Europäisches Patentamt
European Patent Office
Office européen des brevets

(11) **EP 3 060 453 B1**

(12) **EUROPEAN PATENT SPECIFICATION**

(45) Date of publication and mention
of the grant of the patent:
**26.09.2018 Bulletin 2018/39**

(51) Int Cl.:
***B62D 7/14*** *(2006.01)*       ***B62D 12/00*** *(2006.01)*
***B62D 13/04*** *(2006.01)*

(21) Application number: **13895937.4**

(86) International application number:
**PCT/SE2013/000161**

(22) Date of filing: **21.10.2013**

(87) International publication number:
**WO 2015/060752 (30.04.2015 Gazette 2015/17)**

(54) **A WHEEL STEERING SYSTEM FOR CONTROLLING A STEERING ANGLE OF A SECOND PAIR OF STEERABLE WHEELS OF A VEHICLE**

RADLENKSYSTEM ZUR KONTROLLE DES LENKWINKELS EINES ZWEITES PAARS VON LENKBAREN RÄDERN EINES FAHRZEUGS

SYSTÈME DE DIRECTION DE ROUE PERMETTANT DE COMMANDER UN ANGLE DE DIRECTION D'UNE SECONDE PAIRE DE ROUES ORIENTABLES D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.08.2016 Bulletin 2016/35**

(73) Proprietor: **Volvo Truck Corporation**
**405 08 Gothenburg (SE)**

(72) Inventors:
• **LARSSON, Lena**
**S-426 74 Västra Frölunda (SE)**
• **PETTERSSON, Emil**
**S-433 36 Partille (SE)**

(74) Representative: **Volvo Technology Corporation**
**Volvo Group Intellectual Property**
**BF14100, VGHQ3A**
**405 08 Göteborg (SE)**

(56) References cited:
**EP-A2- 0 508 431       WO-A1-2006/054069**
**DE-A1- 10 065 186       US-A- 4 767 588**
**US-A- 4 856 814       US-A- 5 035 439**
**US-A- 5 238 077       US-A- 5 515 275**
**US-A1- 2007 216 134       US-A1- 2008 269 986**
**US-A1- 2008 269 986       US-A1- 2009 292 421**
**US-A1- 2013 264 136       US-B1- 7 164 980**

EP 3 060 453 B1

**Description**

TECHNICAL FIELD

The invention relates to a wheel steering system for controlling a steering angle of a second pair of steerable wheels of a vehicle comprising at least a first and a second pair of steerable wheels and a first and second pair of non steerable wheels, the vehicle being suitable for transporting a load. The disclosure also relates to a vehicle comprises such a wheel steering system, as well as a method for improving manoeuvrability of a vehicle suitable for transporting a load. This invention is particularly suitable for vehicles carrying relatively large loads due to their need for many load carrying wheels, such as e.g. trucks, semi-trailer trucks, buses, dumpers, haulers, and the like.

BACKGROUND

Vehicles adapted to transport large loads, such as trucks, semis, buses, dumpers, haulers, trailers often exert large pressure on the ground as a result of their weight when transporting a load. To handle this pressure, such vehicles often have a plurality of wheel pairs, which decreases the pressure each wheel has to transfer to the ground. At least one pair of wheels is normally provided on a dead axle, which has no controls for steering. As these wheels are always straight, they impact the manoeuvrability of the vehicle, especially if more than one pair of wheels is used. In some vehicles with at least two non steerable axles, one of the non steerable axles can be lifted to improve manoeuvrability of the vehicle.

US20080269986 discloses a system and a method for controlling the load split between the axles of a vehicle with a plurality of axles. This is achieved by controlling the stiffness of the suspension of the vehicle, thereby improving the manoeuvrability of the vehicle.

This works well in some situations, but there is room for an improved vehicle for transporting a load.

Document US2007/216134 is considered to be the closest prior art, and discloses a wheel steering system for controlling a steering angle ($\theta$AXL1, $\theta$AXL1) of a second pair of steerable wheels (66,68) of a vehicle (10) comprising at least a first and a second pair of steerable wheels (64,66,68) and a first and second pair of non steerable wheels (62,60), the vehicle being suitable for transporting a load, wherein the wheel steering system comprises: a steering angle detection device for detecting at least one vehicle steering angle ($\theta$AA); and a control system (47) configured to control the steering angle ($\theta$AXL1, $\theta$AXL1) of at least each of the second pair of steerable wheels (66,68) based on at least the at least one detected steering angle ($\theta$AA) and the steering geometry of the vehicle (WBTRTR).

SUMMARY

An object of the present disclosure is to provide an alternative solution for improving manoeuvrability of a vehicle for transporting a load. The object of the invention is achieved by a wheel steering system according to claim 1. The wheel steering system for controlling a steering angle of a second pair of steerable wheels of a vehicle comprising at least a first and a second pair of steerable wheels and a first and second pair of non steerable wheels, the vehicle being suitable for transporting a load. The wheel steering system comprising a steering angle detection device for detecting a vehicle steering angle, and a control system configured to determine a steering geometry of the vehicle, and to control the steering angle of at least each of the second pair of steerable wheels based on at least the detected steering angle and the determined steering geometry of the vehicle.

By controlling the steering angle of the second pair of steerable wheels based on the determined steering geometry of the vehicle the steering angle of said wheels will be adapted to the current vehicle steering geometry. This improves manoeuvrability by more closely matching the optimal steering geometry of the vehicle. The vehicle can thereby adapt to several different situations, and be more efficient in turning, which allows for less wear on the wheels. As a result, the vehicle is able to turn at sharper angles allowing for new travel paths, improved fuel economy and more confident and satisfied drivers, all without need for the suspension stiffness adjustable equipment required in the solution of the prior art.

The object of the invention is also achieved, for the same reasons, by the method according to claim 15.

According to one embodiment of the invention, the control system is configured to determine the steering geometry of the vehicle by determining a kinematic length of the vehicle. The kinematic length, also known as an effective wheelbase, or actual wheelbase, will be described in detail later in the detailed description. This can vary depending on a number of factors, such as load distribution, torque distribution, suspension parameters, total load, and speed. As the actual kinematic length of the vehicle changes, the steering geometry also changes. Hence, with knowledge of the kinematic length of the vehicle, the steering geometry of the vehicle can be adapted correspondingly, thereby improving manoeuvrability and reducing fuel consumption and tire wear. With an accurate estimate of the actual kinematic length of the vehicle, accurate calculation of the steering geometry is enabled, thereby enabling accurate control of the angle of the steerable wheel that relatively accurately matches the vehicle and load conditions.

According to one embodiment of the invention, the control system is configured to determine the steering geometry of the vehicle by determining a load distribution between at least the first and second pair of non steerable wheels. The steering geometry and load distribution are closely interrelated. With for example two closely arranged non steerable axles and equal load distribution between said axles, the kinematic length will be defined by a line that passes through the middle between the two axles in a direction perpendicular to the longitudinal direction of the vehicle. When the load distribution changes between the axles, from 50/50 to for example 100/00, which corresponds to a lifted axle, the kinematic length will instead be defined by a line that passes through the centre of the load carrying axle. With knowledge of the load distribution, the current kinematic length may be determined, and thereby also the current steering geometry of the steering system, such that the optimal steering angle of the second pair of steerable wheels may be provided.

According to one embodiment of the invention, the control system is configured to determine the steering geometry of the vehicle by receiving information from a vehicle driver input means, which indicates a unique steering geometry of the vehicle amongst at least two different selectable predetermined steering geometries of the vehicle. The driver input means may for example be at least one button or switch that comprises at least two stable positions. The driver may then by selectively actuating the driver input means indicating a desired steering geometry. The steering system may receive information about the selected desired steering geometry and control the steering angle of the second pairs of steerable wheels accordingly. The driver input means may for example correspond to ratio settings that define a ratio between the steering angle of the first and second pair of steerable wheel angles, or more high-level settings such as driving unloaded, half loaded or fully loaded, etc.

According to one embodiment of the invention, the control system is configured to automatically calibrate the steering geometry of the vehicle upon any of: registering altered steering geometry; periodically; registering a predetermined event; or receiving a request from the driver or remote part. The control system is then additionally configured to control the steering angle of at least each of the second pair of steerable wheels based on the calibrated steering geometry of the vehicle. Calibration of the steering geometry improves the accuracy of the vehicle steering. Sometimes, the existing steering geometry does not well corresponds to the actual steering geometry for any reason, and then a calibration is advantageous. The steering system may register an altered steering geometry by detecting that high control forces are required to keep the desired wheel steering angle, or upon detecting that the wheel has a natural angular steering direction different from the controlled steering angle of the control system. Alternatively, external sources, such as a load sensing system may indicate that a change in steering geometry likely has changed. According to another solution, the calibration may be realised at least periodically to detect any changes. Still more alternatively, the steering system may register a predetermined event, such as lifting an axle, tipping the load, connecting an implement, and thereby determine that the steering system requires a calibration. Finally, calibration may still more alternatively be trigger upon receiving a request from the driver or remote part, such as a fleet manager.

According to one embodiment of the invention, the control system configured to determine a steering geometry of the vehicle by detecting a vehicle driving configuration amongst at least two different predetermined driving configurations, wherein each driving configuration is associated with a unique predetermined steering geometry. Thereby, the control system can easily and accurately adapt the steering angle to suit different specific driving and/or load situations. This improves manoeuvrability of the vehicle by steering the wheels more optimally. Using predetermined driving configurations allows for the calculation and calibration of the wheel steering angles to be performed during e.g. a product development phase, and the control system only needs to detect the present driving configuration during standard operation of the vehicle. For example, the control system can detect that the vehicle is operated having a pair of non-steerable wheels lifted. The control system subsequently determines that the predetermined steering geometry corresponding to a lifted axle should be used for controlling the steering angle of the second pair of steerable wheels. Another predetermined driving configuration may for example be operation of the vehicle having the non-steerable wheels in a load carrying condition.

According to one embodiment of the invention, the control system is configured to determine the steering geometry of the vehicle by detecting a steering force of the second pair of steerable wheels. The detected steering force is defined as the detected force necessary to steer the second pair of steerable wheels. This force decreases as the steering angle of each steerable wheel of the second pair of steerable wheels approaches one which is more optimal for the current steering geometry of the vehicle, because with a more optimal steering angle of the wheel the smaller will the sideways sliding motion of the wheel be. The sideways sliding of a non-optimally steered wheel generates a force that acts for allowing the wheel to attain its natural angular steering position, which position corresponds to the optimal steering angle. The steering force may for example be determined by monitoring the fluid pressure of a hydraulic steering actuator, or the like.

According to one embodiment of the invention, the control system is configured to determine the steering geometry of the vehicle by temporarily controlling a steering actuator of the second pair of steerable wheels to enable the second pair of steerable wheels to freely assume a natural angular position, and detecting said angular position of said second pair of steerable wheels. This arrangement allows the steering system to identify an optimal or near optimal steering geometry of the vehicle, without the need for taking load and/or kinematic length into consideration.

The invention also relates to corresponding method steps for improving manoeuvrability of the vehicle.

The invention also relates to a computer program performing a method according to the disclosure and a computer readable medium, which when executed by a computer performs a method according to the disclosure.

The invention further relates to a control unit for controlling a vehicle for transporting a load, the control unit being configured to perform a method according to the disclosure.

BRIEF DESCRIPTION OF DRAWINGS

With reference to the appended drawings, below follows a more detailed description of example embodiments of the invention.

Figure 1 shows a vehicle according to the invention, suitable for transporting a load,

Figure 2 shows a schematic layout of the wheel steering system according to the invention,

Figure 3 shows a schematic image of a vehicle according to the invention, suitable for transporting a load,

Figure 4 shows a schematic image of a vehicle according to the invention, suitable for transporting a load, where one axle has been raised,

Figure 5 shows a schematic image of a vehicle according to the invention, suitable for transporting a load, where the estimated kinetic length of the vehicle has shifted,

Figure 6 shows a schematic image of a vehicle according to the invention, suitable for transporting a load,

Figure 7 shows a schematic image of a vehicle according to the invention, suitable for transporting a load where the second pair of steerable wheels are located directly behind the first pair of steerable wheels,

Figure 8 shows a schematic image of a vehicle according to the invention, suitable for transporting a load where the second pair of steerable wheels are located directly ahead of the non steerable axles,

Figure 9 shows a schematic image of an articulated vehicle according to the invention, suitable for transporting a load,

Figure 10 shows a schematic image of a vehicle with a trailer according to the invention, suitable for transporting a load,

Figure 11 shows a flowchart of a method for controlling a vehicle according to the invention,

Figure 12 shows a flowchart of a modified method for controlling a vehicle according to the invention.

DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

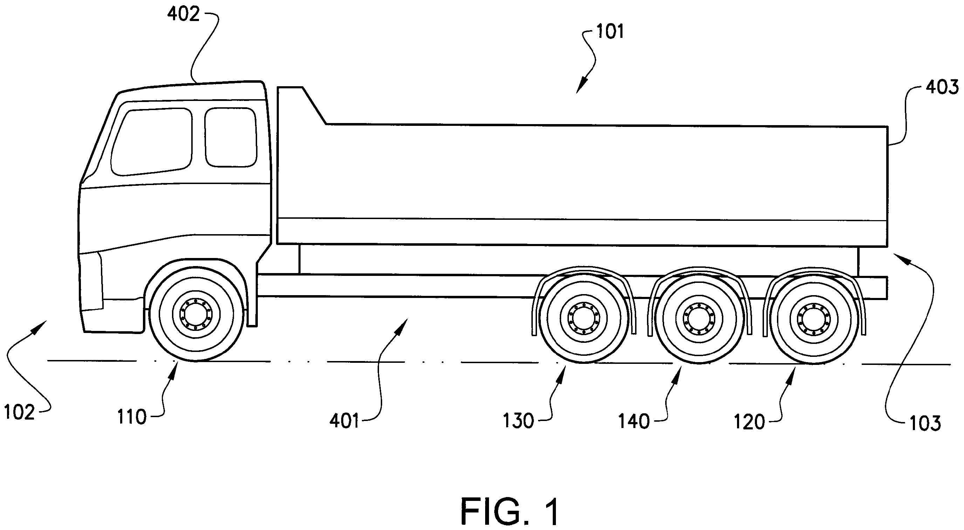

Fig. 1 shows a vehicle 101 suitable for transporting a load. The vehicle is equipped with a chassis 401, a driver's cabin 402 and a cargo container 403. The vehicle 101 is further equipped with a first axle 110 comprising a first pair of steerable wheels located in the front 102 of the vehicle, a first and second non steerable axle 130, 140 located in a rear of the vehicle 101. A first pair of non steerable wheels is provided on the first non steerable axle 130 and a second pair of non steerable wheels is provided on the second non steerable axle 140. The first and second non steerable axles 130, 140 are displaced in the length direction of the vehicle. The outer circumference of the wheels of the non steerable axles 130, 140 wheels may typically exhibit a minimum distance in the length direction in the range of 0.1 - 2.0 metres, preferably 0.2 - 1.0 metres. The vehicle is additionally equipped with a second pair of steerable wheels located on a load carrying second axle 120 in the rear 103 of the vehicle 101, behind the first and second non steerable axles 130, 140. Such a non load carrying axle 120 is often referred to as tag axle, and the entire vehicle configuration is often referred to as a tridem vehicle. The outer circumference of the wheels of the second non steerable axle 140 may typically exhibit a minimum distance in the length direction in the range of 0.1 - 3.0 metres from the outer circumference of the second pair of steerable wheels, preferably in the range of 0.2 - 2.0 metres.

The first and/or second non steerable axles 130, 140 may be driven axles, i.e. axles that carry wheels that are rotationally connected to the power train of the vehicle. The first and/or second pairs of steerable wheels may be merely load carrying, i.e. disconnected from the power train, or drivingly connected to the power train. The first and second axles 110, 120 and first and second non steerable axles are 130, 140 are mounted to the same rigid vehicle frame structure. The frame is consequently not an articulated frame structure. The frame structure has an elongated form that defines a length direction of the vehicle, and each axle of the vehicle is oriented in a transverse direction that is perpendicular to the length direction. The first pair of steerable wheels in the front 102 are typically controlled by any suitable conventional steering method such as e.g. by means of rack-and-pinion, where the wheels are mechanically connected to the steering wheel shaft by a mechanical linkage. The second pair of steerable wheels in the rear 103 is typically controlled by wire, and a steering actuator controls the steering angle of each wheel. One steering actuator may be provided for each wheel, or a single steering actuator is provided and arranged to control the steering angle of both wheels. The steering actuator may typically be a hydraulic actuator powered by a hydraulic pump in a hydraulic circuit, a pneumatic actuator powered in a corresponding manner, or an electrical steering actuator, for example in form of a threaded shaft that is rotated by an electrical motor.

The vehicle 101 is preferably a full-suspension truck. Preferably the vehicle is capable of travelling at a speed of at least 70 km/h. More preferably, the vehicle is capable of travelling at a speed of at least 80 km/h. Even more preferably, the vehicle is capable of travelling at a speed of at least 90 km/h. The vehicle 101 is preferably capable of transporting a load of at least 5 tonnes. More preferably, the vehicle is capable of transporting a load of at least 10 tonnes. Even more preferably, the vehicle is capable of transporting a load of at least 15 tonnes. This type of vehicle is designed for driving both on highways and rugged terrain, such as a construction site. The tridem wheel configuration results in a high load carrying capacity. The load is typically gravel, sand, stone, rocks, timber, fluid material enclosed in a tank, or other.

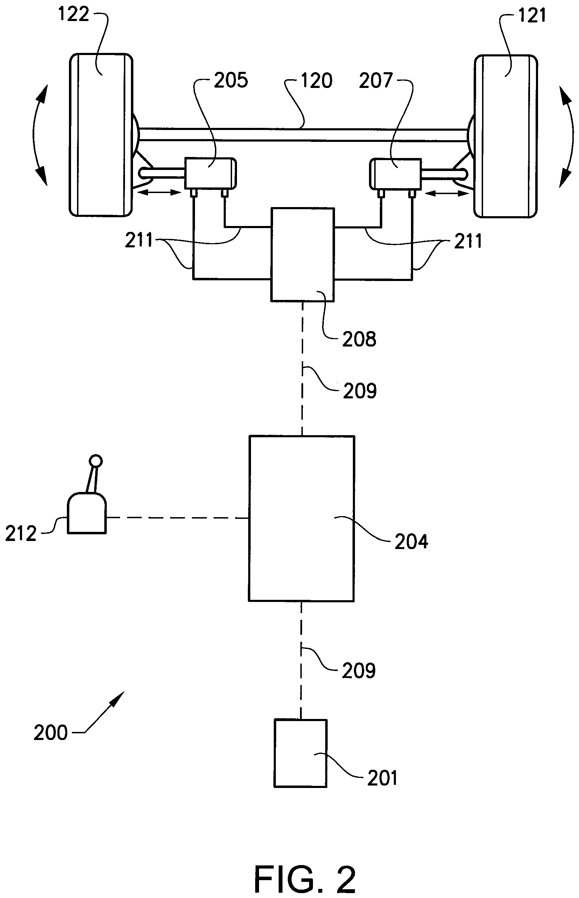

The vehicle 101 further comprises a wheel steering system 200 as schematically illustrated in Fig. 2. The wheel steering system 200 is arranged for controlling the steering angle of the second pair of steerable wheels 121, 122. For this task, the wheel steering system 200 comprises a steering angle detection device 201 that is configured to detect the vehicle steering angle. The detected steering angle may be an angle associated with the wheel steering angle of the first pair of wheel or an internal pivoting angle between the front and rear part of an articulated vehicle, such as a dumper or semi-trailer vehicle. The wheel steering system 200 further comprises a control system 204 that is configured to determine the steering geometry of the vehicle 101. The control system 204 typically comprises an electronic microprocessor that is configured to execute instructions read from a memory, as is well-known to the person skilled in the art. The steering geometry of any vehicle 101 comprises aspects such as number and location of wheels, kinematic length of the vehicle, if the wheels transmit traction to the ground or merely supports the load of the vehicle, the width between the left and right wheel of each pair of wheels, etc. Many of these parameters do not change during use of the vehicle 101 but some of them do change, thereby changing also the steering geometry of the vehicle 101. The control system 204 is configured to determine a steering geometry of the vehicle 101. This is performed by monitoring and/or detecting at least one variable parameter of the vehicle 101 and/or load, and to determine a steering geometry based on the detected status/position of that relevant parameter, assuming that the other parameters remain unchanged. For example, the kinematic length of the vehicle 101 depends on the load distribution between the first and second non steerable axles 130, 140. The steering geometry is preferably implemented as a mathematical equation $\beta = f(\alpha, P)$ in the control system, wherein the desired steering angle $\beta$ of the second pair of steerable wheels 121, 122 is determinable by means of the equation as a function of the detected steering angle $\alpha$ and the at least one variable parameter P. The variable parameter P may for example be a variable kinematic length of the vehicle, a variable load and/or driving torque distribution between the first and second non steerable axles 130, 140, a variable steering angle ratio between the first and second pair of steerable wheels 121, 122, or a selection/detection of a unique driving configuration. The control system 204 is subsequently arranged to control the steering angle of the second pair of steerable wheels 121, 122 based on the detected vehicle steering angle and the determined steering geometry of the vehicle 101.

The wheel steering system 200 further comprises steering means for steering the second pair of steerable wheels 121, 122. In Fig. 2 the steering means is implemented as first and second linear hydraulic actuators 205, 207 that are controlled by a fluid supply arrangement 208 including a control valve, pump and tank. Fluid lines 211 connect the fluid supply arrangement 208 with each of the hydraulic actuators 205, 207. Control lines 209 connect the control unit 204 with the steering angle detection device 201 and the fluid supply arrangement 208. Many alternative designs are possible, such as using pneumatic and electrically operated actuators. A mechanical steering connection between the second pair of steerable wheels and the steering wheel shaft or the first pair of steerable wheels is also possible.

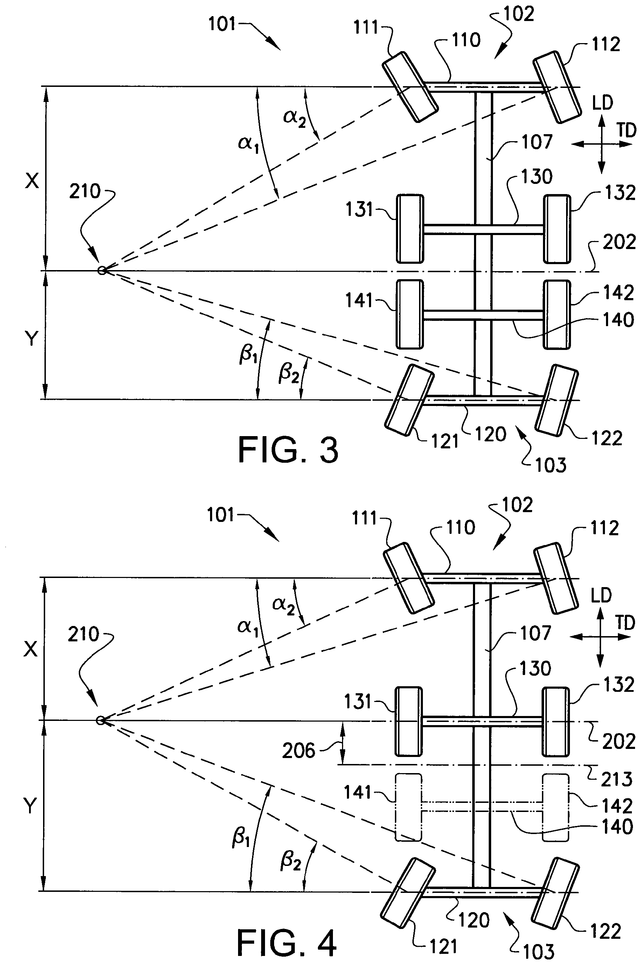

Fig. 3 shows a schematic image of an elongated frame structure 107, wheels 111, 112, 121, 122, 131, 132, 141, 142 and steering geometry of the vehicle 101 in Fig. 1 as viewed from above. The vehicle 101 is equipped with a first pair of steerable wheels 111, 112, which are located on a first axle 110, with or without individual wheel suspension, wherein the steering for example is mechanically controlled by a steering wheel that is mechanically rotationally connected to the steering wheels 111, 112 via a rack-and pinion linkage (non showed). The vehicle 101 further comprises a second pair of steerable wheels 121, 122, located on a second axle 120, a first non steerable axle 130 comprising first non steerable wheels 131, 132, and a second non steerable axle 140 comprising second non steerable wheels 141, 142. With an optimal steering geometry the angles $\alpha_1$, $\alpha_2$, $\beta_1$, $\beta_2$ associated with the first and second pair of steerable wheels 111, 112, 121, 122 will be controlled such that each pair of steerable wheels 111, 112, 121, 122 is travelling in a direction essentially perpendicular to a common point, representing the point around which the vehicle 101 will turn, also known as the turning point or turning centre 210. With an optimal steering geometry the turning centre 210 also coincides with an imaginary line 202 extending perpendicularly from the vehicle length direction LD. In Fig. 3, this line 202 extends from essentially the midpoint between the two non steerable axles 130, 140. With this steering geometry the steerable wheels 111, 112, 121, 122 will exhibit a minimal tire wear and the vehicle will have a good manoeuvrability.

Fig. 3 shows the first pair of steerable wheels 111, 112 being steered to make the vehicle 101 turn towards the left. In this embodiment, the first pair of steerable wheels 111, 112 is located at the front 102 of the vehicle 101. The kinematic length X of the vehicle will be defined by the distance in the length direction LD from the axle 110 of the first steerable wheels 111, 112 to said imaginary line 202. A distance Y is defined as the length in the length direction LD from the second axle 120 of the second pair of steerable wheels 121, 122 to the imaginary line 202. The steering geometry of the vehicle shown in fig. 3 can be determined by

$$\beta_1 = \tan^{-1}\left(\frac{Y}{X} \times \tan\alpha_1\right)$$

Equation 1

and

$$\beta_2 = \tan^{-1}\left(\frac{Y}{X} \times \tan\alpha_2\right)$$

Equation 2

where $\beta_1$ and $\beta_2$ corresponds to the steering angle of the right and left wheel 122, 121 respectively of the second pair of steerable wheels. In case the angle $\alpha_1$, $\alpha_2$ of each of the first pair of wheels 111, 112 are not accessible for any reason, other input angles associated with the vehicle steering angle can be used for calculating the steering angles $\beta_1$, $\beta_2$ of the second pair of steerable wheels 121, 122. For example, an average wheel steering angle, a position of the steering linkage of the first pair of steerable wheels 111, 112, or the angular position of the steering wheel shaft may be used for calculating the steering angle $\alpha_1$, $\alpha_2$ of each of the first pair of wheels 111, 112.

The steering geometry of the vehicle is closely related to the kinematic length X of the vehicle, and in the vehicle steering geometry of fig. 3 the kinematic length X depends on the load distribution between the first and second pair of non steerable axles 130, 140. With an equal load distribution between these axles 130, 140, the imaginary line 202 passes in the middle between the axles 130, 140. However, as soon as the load distribution is not equal, the imaginary line is displaced in the direction towards the axle 130, 140 carrying more load.

Fig. 4 shows the same vehicle configuration as Fig. 3 but with a different load distribution between the first and second non steerable axles 130, 140. In this example the second non steerable axle 140 is lifted (shown as dash-dot-dot line), such that the associated non steerable wheels 141, 142 are lifted above the ground. As a result, the second non steerable axle 140 does no longer carry any load, and the imaginary line 202 passes through the axial centre of the first axle 130. The load distribution between the first and second pair of non steerable wheels 130, 140 is thus 100% tilted to the first non steerable axle 130. This causes the steering geometry of the vehicle 101 to change compared with the example shown in Fig. 3. This change in steering geometry is indicated in Fig. 4 by the distance 206 between the centre line 213 located in the centre of the first and second non steerable axles 130, 140 as seen in the longitudinal direction LD and the new displaced position of the imaginary line 202. With the steering angles $\alpha_1$, $\alpha_2$ of the first pair of steerable wheels 111, 112 unchanged, the steering angles $\beta_1$, $\beta_2$ of the second pair of steerable wheels must be adjusted to the new steering geometry of the vehicle.

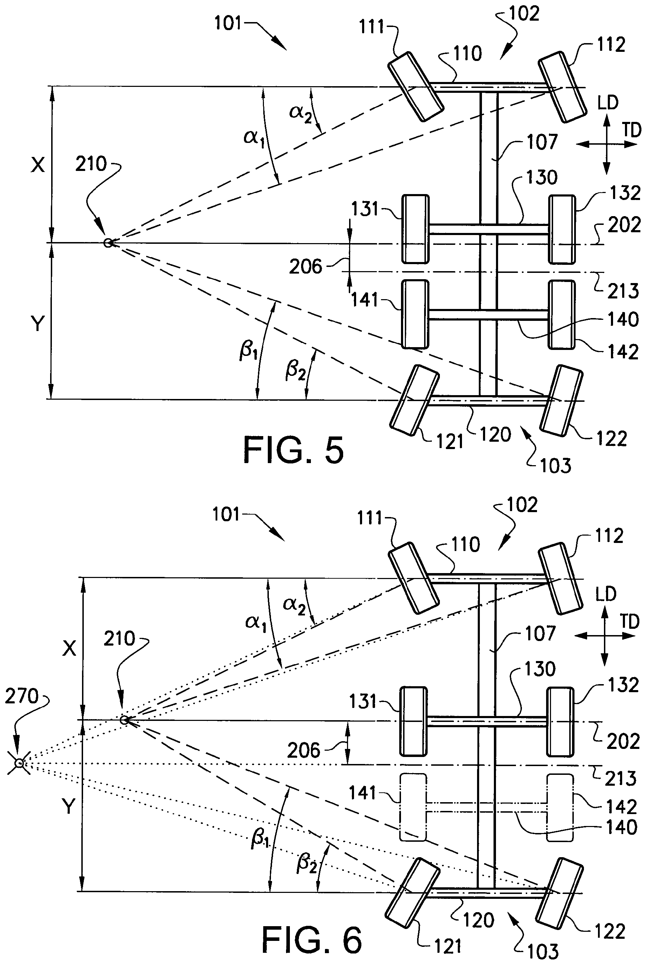

Fig. 5 shows the same vehicle configuration as Fig. 3 and Fig. 4 but with yet a different load distribution between the first and second non steerable axles 130, 140. Here, both non steerable axles 130, 140 carries a load but the first non steerable axle 130 carries a larger load than the second non steerable axle 140, for example due to uneven loading of the vehicle. The imaginary line 202 of the vehicle is here located at a distance 206 from the centre line 213 between the non steerable axles 130, 140. This causes the steering geometry of the vehicle 101 to change again compared with the examples of Fig. 3 and Fig. 4. With the steering angles $\alpha_1$, $\alpha_2$ of the first pair of steerable wheels 111, 112 unchanged, the steering angles $\beta_1$, $\beta_2$ of the second pair of steerable wheels must be adjusted to the new steering geometry of the vehicle.

In Fig. 6, a more detailed schematic over the steering geometry is shown for illustrating that the control system 204 advantageously is configured to also adjust a ratio between the left and right steering angle of at least one pair of steerable wheels 111, 112, 121, 122 based on at least the determined steering geometry of the vehicle 101. Upon displacement of the imaginary line 202 from the centre line 213 to the new location, the previous centre of rotation 270 will displace to a location closer to the vehicle 101 for the same steering angle $\alpha_1$, $\alpha_2$ of the first pair of steerable wheels 111, 112. As a result, the first pair of steerable wheels 111, 112 can no longer both be exactly perpendicular to the new turning centre without adjusting the steering angle ratio between the left and right wheel 111, 112 of the first pair of steerable wheels 111, 112. In the embodiment illustrated in Fig. 6 this adjustment has been realised such that first pair of steerable wheels 111, 112 still exhibit a true Ackermann steering geometry. If the first and/or second pair of steerable wheels 111, 112, 121, 122 is mechanically connected to the steering wheel shaft it may be difficult and complex to control and change the ratio between the left and right wheel 111, 112, 121, 122. If the left and right wheel 111, 112, 121, 122 are individually controlled the ratio between them can more easily be changed such that they are both perpendicular to the new turning centre 210 of the vehicle 101. This type is steering error, i.e. an incorrect ratio between the left and right steering angle, which is relatively small, is not shown in the other figures of the disclosure

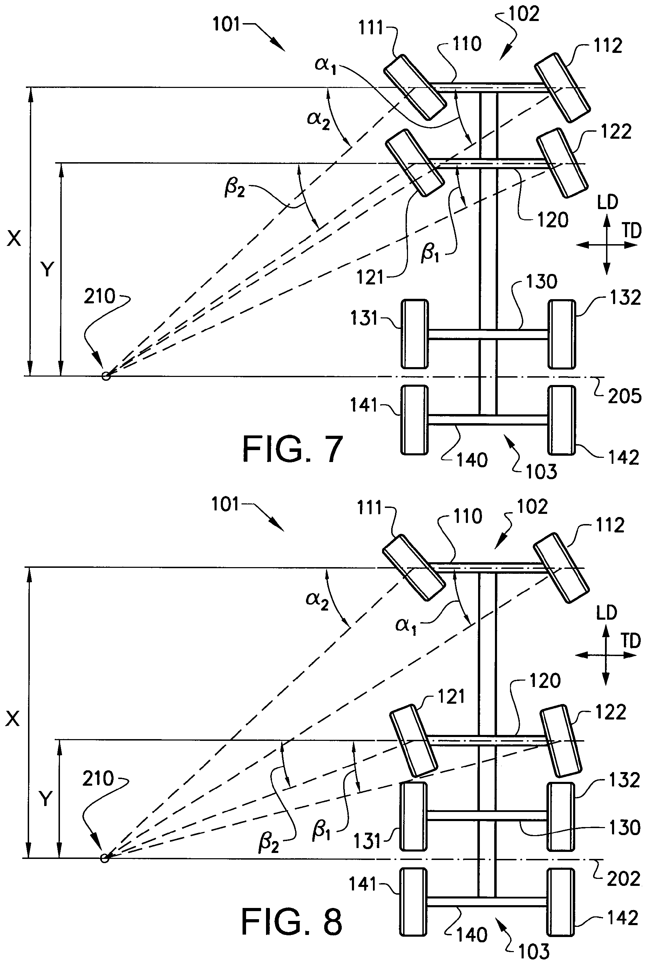

The invention may be applied to a large variety of vehicles having at least a first and a second pair of steerable wheels 111, 112, 121, 122 and a first and second pair of non steerable wheels 131, 132, 141, 142. For example, in the embodiment of Fig. 7 the first and second axle 110, 120 jointly forms a twin steering axle located in the front of the vehicle 101, with the second axle 120 located behind the first steering axle 110. The second pair of steerable wheels 121, 122 may here be controlled by wire similar to the embodiments of Fig. 3-6, or by a mechanical connection considering the relatively short distance between the first and second axle 110, 120. Equations 1 and 2 as previously described may be used also here for determining the steering angle of each of the second pair of steerable wheels 121, 122.

Still a further example of a vehicle configuration that may apply the wheel steering system according to the invention is shown in fig. 8. This vehicle configuration comprises a first pair of steerable wheels 111, 112 located in the front 102 of the vehicle 101 and a first and second pair of non steerable wheels 131, 132, 141, 142 located in the rear 103 of the vehicle 101. The vehicle 101 further comprises a second pair of steerable wheels 121, 122 fastened to a second axle 120 located just in front of the two non steerable axles 130, 140. The second axle 120 is in this configuration commonly referred to as pusher axle.

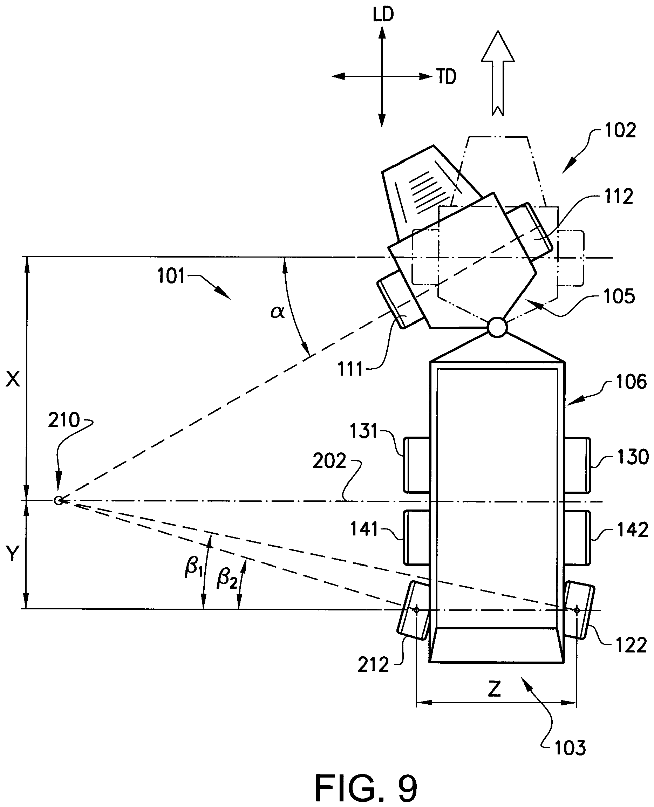

Still a further example of a vehicle that may apply the wheel steering system according to the invention is shown in Fig. 9, where the first pair of steerable wheels 111, 112 is attached to an articulated front section 105 of the vehicle 101. In this embodiment, the first pair of steerable wheels 111, 112 is steered by changing the angle of articulation between the front and rear sections 105, 106 of the vehicle 101. This means that the vehicle steering angle $\alpha$ in this embodiment corresponds to the angle $\alpha$ of articulation between the front and rear sections 105, 106 of the vehicle 101. Due to the slightly different steering geometry of this vehicle layout, and the fact that there is only a single vehicle steering angle a, the equation for calculating the steering angles $\beta_1$, $\beta_2$ of the second pair of steerable wheels will be slightly different. The steering geometry of the vehicle shown in fig. 9 can be determined by

$$\beta_1 = \tan^{-1}\left(\frac{Y}{\frac{X}{\tan\alpha} + \frac{Z}{2}}\right) \qquad\qquad \text{Equation 3}$$

and

$$\beta_2 = \tan^{-1}\left(\frac{Y}{\frac{X}{\tan\alpha} - \frac{Z}{2}}\right) \qquad\qquad \text{Equation 4}$$

where X corresponds to the kinematic length of the vehicle defined by the length in the length direction LD between the first steering axle 110 to the imaginary line 202, Y corresponds to the length in the length direction LD between the imaginary line 202 and the second axle 120, and Z corresponds to the width between the centre of pivoting motion of each wheel of the second pair of wheels 121, 122.

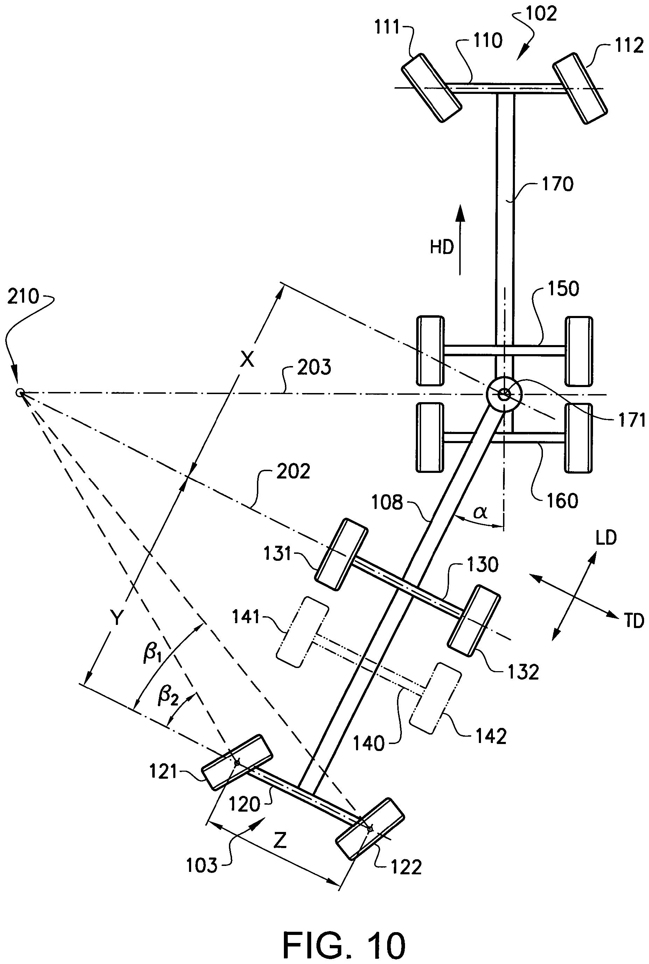

In Fig. 10 another embodiment of the invention is shown, where the vehicle is a semi-trailer truck. The first pair of steerable wheels 111, 112 is located on the tractor unit 170 and the second pair of steerable wheels 121, 122 is located on a trailer axle fastened to a semi-trailer 108. The tractor unit 170 further comprises two non steerable axles 150, 160 for supporting the load of the semi trailer and for traction. The trailer 108 further comprises a first non steerable axle 130 comprising first non steerable wheels 131, 132 and a second non steerable axle 140 comprising second non steerable wheels 141, 142, both axles 130, 140 located ahead of the second axle 120. In fig. 10 the second non steerable axle 140 is lifted and the imaginary line 202 thus passes through the centre of the only remaining non steerable axle that carries load, namely the first non steerable axle 130. The centre of rotation 210 of the trailer 108 is defined by the crossing of the imaginary line 202 and a further imaginary line 203 that is perpendicular to the current heading direction HD of the tractor unit 170 and passing through the pivoting centre of the fifth wheel 171. The distance X is here defined by the length in the length direction LD between the imaginary line 202 and the pivoting centre of the fifth wheel, and the distance Y is defined by the length in the length direction LD between the imaginary line 202 and the centre of the second axle 120, wherein the length direction LD is the direction of elongation of the semi trailer 108. Equation 3 and 4 above may be used for calculating the steering angles $\beta_1$ and $\beta_2$ of each wheel of the second pair of steerable wheels 121, 122, similar to the embodiment of Fig. 9. The steering angle detection device for detecting the vehicle steering angle $\alpha$ is here preferably placed near to the fifth wheel for being able to determine the vehicle steering angle, which in this embodiment corresponds to the difference in heading direction HD of the tractor unit 170 and the length direction LD of the semi-trailer 108 as seen from above.

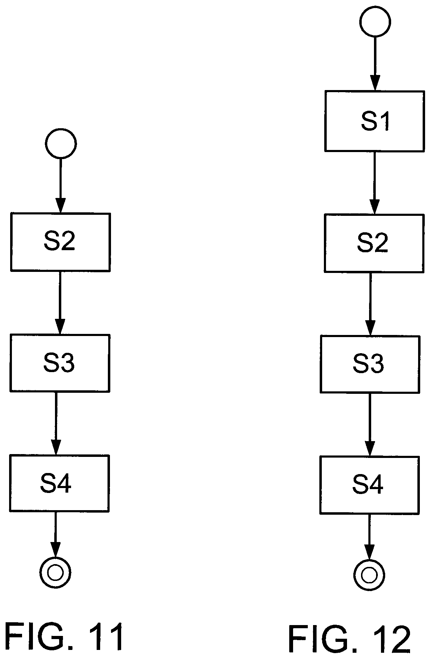

Fig. 11 shows a flowchart of a method for improving manoeuvrability of a vehicle 101 suitable for transporting a load according to an embodiment of the invention. The method comprises the steps of detecting S2 a vehicle steering angle, determining S3 a steering geometry of the vehicle, and controlling S4 the steering angle of at least each of the second pair of steerable wheels based on at least the detected steering angle and the determined steering geometry of the vehicle.

The step of determining S2 the vehicle steering angle is preferably implemented by means of and steering angle sensor that detects the angular position of the steering wheel shaft. The angle of each wheel 111, 112 of the first pair of steerable wheels 111, 112 may subsequently be determined based on a look-up table. Alternatively, the vehicle steering angle may be determined by detecting the actual angular position of each wheel 111, 112 of the first pair of steerable wheels 111, 112 by means of angle sensor located close to each wheel 111, 112. Still alternatively, if the first pair of steerable wheels 111, 112 are located on a front part of a articulated vehicle and the second pair of steerable wheels 121, 122 are located on a rear part of the articulated vehicle, such as a frame steered vehicle or a semi-trailer truck, the vehicle steering angle may be determined by means of an angle sensor that detects the current angle between a front part and rear part of a articulated vehicle.

The step of determining S3 the steering geometry of the vehicle may, as described above, be realised in many different ways. The steering geometry may for example be determined by determining a kinematic length X of the vehicle. With knowledge of the kinematic length X of the vehicle the steering angle of the second pair of steerable wheels can be calculated by means of equation 1 - 4 above. The kinematic length X may be determined by a predetermined look-up table comprising for example load and/or torque distribution between the first and second pair of non steerable wheels 111, 112, 121, 122. The load distribution may be determined by monitoring the pressure of the air suspension of each non steerable axle 130, 140. The torque distribution may be derived based on the control signal to the clutch connecting the drive shaft of the first non steerable axle 130 with the drive shaft of the second non steerable axle 140, or corresponding means.

The steering geometry may alternatively be determined by detecting a vehicle 101 driving configuration amongst at least two different predetermined driving configurations, wherein each predetermined driving configuration is associated with a unique steering geometry.

The steering geometry may alternatively be determined by receiving information from a vehicle driver input means, which indicates a unique steering geometry of the vehicle amongst at least two different selectable predetermined steering geometries of the vehicle.

The steering geometry may alternatively be determined by detecting a steering force of the second pair of steerable wheels 121, 122. During driving in a curve, the second pair of steerable wheels is controlled to exhibit a steering angle corresponding to a true Ackermann steering model. However, if for any reason the determined kinematic length X of the vehicle is incorrect, the first and second pair of steerable wheels will not be perpendicular to the centre of rotation of the vehicle. As a result, the second pair of steerable wheels will likely slide sideways to a certain extent during driving in curves. This sliding motion of the steerable wheels will generate a force that urges the wheel to stop sliding and instead adopt a steering angle that is more optimal in terms of tire wear. By detecting the force level required to control and actuate the second pair of steerable wheels, as well as the direction of said force, an indication of the accuracy of the steering geometry may be obtained. High steering forces indicated high level of tire wear and a non optimal steering angle. Likewise, low steering forces indicates low level of tire wear and a more optimal steering angle. The level and direction of the force may for example be determined by detecting the fluid pressure in the rod end and/or cap end of the fluid cylinder that operates as the steering actuator. The detected force may subsequently be converted to a desired ratio between the steering angle of the first and second pair of steerable wheels based on a predetermined look-up table. The table may for example include current steering force data, current steering angle of first pair of steerable wheels, current ratio, and new corrected ratio. Additional aspects such as load level, load and/or driving torque distribution between the first and second non steerable wheels, vehicle speed, road condition, wheel grip condition, etc. may also be taken into account to provide improved accuracy of the new corrected ratio. This approach is well suited for calibration of the currently used steering geometry, as well as for verifying that the currently selected steering geometry fits well to the current vehicle configuration.

The steering geometry may alternatively be determined by temporarily controlling a steering actuator of the second pair of steerable wheels 121, 122 to enable the second pair of steerable wheels 121, 122 to freely assume a natural angular position, and detecting said angular position of said second pair of steerable wheels 121, 122. This approach is based on the fact that a vehicle comprising a single pair of steerable wheels, i.e. the first pair of steerable wheels, together with the first and second pair of non steerable wheels defines a determinable system, whereas a vehicle comprising two pairs of steerable wheels defines an overdetermined system. It is thus possibly to let the second pair of steerable wheels 121, 122 to freely assume a natural angular position. Depending on the wheel suspension designs of the second pair of steerable wheels, these wheels will simply automatically assume the angular position that corresponds to a minimal roll resistance, which here is considered to represent an optimal steering angle. With knowledge of the steering angle of both the first and second pair of wheels 111, 112, 121, 122 for a certain radius of curvature, a variable ratio between these steering angles can be determined. This variable ratio can subsequently be used for controlling the steering angle of said second pair of steerable wheels 121, 122 with input about the steering angle of the first pair of wheels. Alternatively, the steering angle of the first and second pair of steerable wheels may used for calculating a kinematical length X of the vehicle 101, and with knowledge thereof the steering angle of the second pair of steerable wheels 121, 122 may be calculated by equations 1 and 2 or 3 an 4. This approach is well suited for calibration of the currently used steering geometry, as well as for verifying that the currently selected steering geometry fits well to the current vehicle configuration.

The steering geometry may additionally be determined by a combination of any of the above descried approaches.

Fig. 12 shows a flowchart of a method according to one embodiment of the invention. Here the method is provided with an automatically or manually initiated calibration of the steering geometry. The method comprises the step S1 of receiving a command to perform calibration. The command may for example be issued upon registering of an altered steering geometry. This may for example include registering an altered load and/or torque distribution between the first and second pair of non steerable wheels. Alternatively, the command may be issued upon lapse of a predetermined time period since the last calibration event was performed. More alternatively, the command may be issued upon registering a predetermined event, such as detection of operation of the lifting mechanism of a liftable wheel axle, an indication that cargo is being or has been loaded or unloaded, actuation of a predetermined actuator switch by the driver, such as axle lifting actuator switch, differential locking actuator switch, additional traction wheels actuator switch, etc. Still more alternatively the command may be issued upon receiving a request to perform calibration from the driver or remote part such as a vehicle fleet manager. When a command has been received the method proceeds to the steps S2 - S4 described in relation to fig. 11.

The term "steerable wheels" includes in the disclosure not only wheels that may be pivoted around a substantially vertical axle with respect to the adjacent vehicle chassis that supports the wheel, but also wheels associated with a fixed shaft that is fastened to a pivoting part of the chassis of the vehicle. For example, a frame-steered or articulated vehicle comprising a front and a rear parts that are mutually pivotally connected to enable steering of the vehicle. One of those parts, often the smaller front part, is provided with a wheel shaft having wheels. These wheels, which may be driven wheels, are herein also referred to as steerable wheels because steering of the vehicle inherently involves a pivotal motion of the wheels of the front part with respect to the non steerable wheels of the rear part of the vehicle.

The term "non steerable wheels" means in this disclosure wheels that have a fixed, non variable, rolling direction with respect to the adjacent vehicle chassis that supports the wheel.

Reference signs mentioned in the claims should not be seen as limiting the extent of the matter protected by the claims, and their sole function is to make claims easier to understand.

As will be realised, the disclosure is capable of modification in various obvious respects, all without departing from the scope of the appended claims. Accordingly, the drawings and the description thereto are to be regarded as illustrative in nature, and not restrictive.

## Claims

1.   A wheel steering system (200) for controlling a steering angle ($\beta_1$, $\beta_2$) of a second pair of steerable wheels (121, 122) of a vehicle (101) comprising at least a first and a second pair of steerable wheels (111, 112, 121, 122) and a first and second pair of non steerable wheels (131, 132, 141, 142), the vehicle being suitable for transporting a load, the wheel steering system (200) comprising
a steering angle detection device (201) for detecting at least one vehicle steering angle ($\alpha$, $\alpha_1$, $\alpha_2$); and
a control system (204) configured to
determine a steering geometry of the vehicle (101) by determining a load distribution between at least the first and second pair of non steerable wheels (131, 132, 141, 142), and
control the steering angle ($\beta_1$, $\beta_2$) of at least each of the second pair of steerable wheels (121, 122) based on at least the at least one detected steering angle ($\alpha$, $\alpha_1$, $\alpha_2$) and the determined steering geometry of the vehicle (101).

**2.** The wheel steering system according to claim 1, **characterised in that** the control system (200) is configured to determine the steering geometry of the vehicle (101) by determining a kinematic length (X) of the vehicle (101).

**3.** The wheel steering system according to any of the preceding claims, **characterised in that** the control system (204) is configured to determine the steering geometry of the vehicle (101) by determining a driving torque distribution between at least the first and second pair of non steerable wheels (131, 132, 141, 142).

**4.** The wheel steering system according to any of the preceding claims, **characterised in that** the control system (204) is configured to determine the steering geometry of the vehicle (101) by detecting a steering force of the second pair of steerable wheels (121, 122).

**5.** The wheel steering system according to any of the preceding claims, **characterised in that** the control system (204) is configured to determine the steering geometry of the vehicle (101) by temporarily controlling a steering actuator (205, 207) of the second pair of steerable wheels (121, 122) to enable the second pair of steerable wheels (121, 122) to freely assume a natural angular position, and detecting said angular position of said second pair of steerable wheels (121, 122).

**6.** The wheel steering system according to any of the preceding claims, **characterised in that** the control system (204) is configured to determine the steering geometry of the vehicle (101) by receiving information from a vehicle driver input means (212), which indicates a unique steering geometry of the vehicle (101) amongst at least two different selectable predetermined steering geometries of the vehicle.

**7.** The wheel steering system according to any of the preceding claims, **characterised in that** the control system (204) configured to determine the steering geometry of the vehicle (101) by detecting a vehicle driving configuration amongst at least two different predetermined driving configurations, wherein each driving configuration is associated with a unique predetermined steering geometry.

**8.** The wheel steering system according to any of the preceding claims, **characterised in that** the control system (204) is configured to control the steering angle ($\beta_1$, $\beta_2$) of at least each of the second pair of steerable wheels (121, 122) such that each steerable wheel (121, 122) of the vehicle has substantially the same centre of rotation around which the vehicle will turn.

**9.** The wheel steering system according to any of the preceding claims, **characterised in that** the control system (204) is configured to adjust a ratio between the left and right steering angle ($\alpha_1$, $\alpha_2$, $\beta_1$, $\beta_2$) of at least one pair of steerable wheels (111, 112, 121, 122) based on at least the determined steering geometry of the vehicle (101).

**10.** The wheel steering system according to any of the preceding claims, **characterised in that** at least one of the first and second pair of non steerable wheels (131, 132, 141, 142) is liftable by means of a wheel lifting mechanism.

**11.** The wheel steering system according to any of the preceding claims, **characterised in that** the first pair of steerable wheels (111, 112) is located in the front (102) of the vehicle (101), and the second pair of steerable wheels (121, 122) is located on a pusher axle, a tag axle, a trailer axle or a steering axle positioned rearwardly of the first steering axle.

**12.** Vehicle for transporting a load comprising at least a first and a second pair of steerable wheels (111, 112, 121, 122) and a first and second pair of non steerable wheels (131, 132, 141, 142), **characterised in that** the vehicle further comprising a wheel steering system (200) according to any of the preceding claims 1 - 11.

**13.** Method for improving manoeuvrability of a vehicle (101) suitable for transporting a load, the vehicle (101) comprising at least a first and a second pair of steerable wheels (111, 112, 121, 122) and a first and second pair of non steerable wheels (131, 132, 141, 142), the method comprising
detecting vehicle steering angle ($\alpha$, $\alpha_1$, $\alpha_2$);
determining a steering geometry of the vehicle (101) by determining a load distribution between at least the first and second pair of non steerable wheels (131, 132, 141, 142); and
controlling the steering angle ($\beta_1$, $\beta_2$) of at least each of the second pair of steerable wheels (121, 122) based on at least the detected steering angle ($\alpha$, $\alpha_1$, $\alpha_2$) and the determined steering geometry of the vehicle (101).

**14.** Method according to claim 13, comprising determining the steering geometry of the vehicle by determining a kinematic length (X) of the vehicle (101).

15. Method according to any of claims 13 -14, comprising determining the steering geometry of the vehicle (101) by determining a driving torque distribution between at least the first and second pair of non steerable wheels (131, 132, 141, 142).

16. Method according to any of claims 13 - 15, comprising determining the steering geometry of the vehicle (101) by detecting a steering force of the second pair of steerable wheels (121, 122).

17. Method according to any of claim 13 -16, comprising determining a steering geometry of the vehicle (101) by detecting a vehicle driving configuration amongst at least two different predetermined driving configurations, wherein each driving configuration is associated with a unique steering geometry.

18. Method according to any of claims 13 - 17, comprising determining the steering geometry of the vehicle (101) by receiving information from a vehicle driver input means (212), which indicates a unique steering geometry of the vehicle amongst at least two different selectable predetermined steering geometries of the vehicle.

19. Method according to any of claims 13 - 18, comprising adjusting a ratio between the left and right steering angle ($\beta_1$, $\beta_2$, $\alpha_1$, $\alpha_2$) of at least one pair of steerable wheels (111, 112, 121, 122) based on at least the determined steering geometry of the vehicle.

20. Method according to any of claims 13 -19, comprising controlling the steering angle ($\beta_1$, $\beta_2$) of at least each of the second pair of steerable wheels (121, 122) such that said wheels (121, 122) has substantially the same centre of rotation around which the vehicle will turn.

21. Method according to any of claims 13 - 20, comprising determining the steering geometry of the vehicle by:

temporarily controlling a steering actuator (205, 207) of the second pair of steerable wheels (121, 122) to enable the second pair of steerable wheels (121, 122) to freely assume a natural angular position, and
detecting said angular position ($\beta_1$, $\beta_2$) of said second pair of steerable wheels (121, 122).

22. A computer program comprising program code means for performing the method of claims 13 - 21 when said program is executed by a computer.

23. A computer readable medium comprising a computer program which, when executed by a computer performs the method of claims 13 - 21.

24. A control unit (109) for controlling a vehicle (101) for transporting a load, the control unit being configured to perform the method of claims 13 - 21.

**Patentansprüche**

1. Radlenksystem (200) zum Steuern eines Lenkwinkels ($\beta_1$, $\beta_2$) eines zweiten Paars von lenkbaren Rädern (121, 122) eines Fahrzeugs (101) umfassend wenigstens ein erstes und ein zweites Paar von lenkbaren Rädern (111, 112, 121, 122) und ein erstes und ein zweites Paar von nichtlenkbaren Rädern (131, 132, 141, 142), wobei das Fahrzeug zum Transportieren einer Last geeignet ist, wobei das Radlenksystem (200) umfasst
eine Lenkwinkelerfassungsvorrichtung (201) zum Erfassen wenigstens eines Fahrzeuglenkwinkels ($\alpha$, $\alpha_1$, $\alpha_2$); und
ein Steuersystem (204), das dazu konfiguriert ist,
durch Bestimmen einer Lastverteilung zwischen wenigstens dem ersten und dem zweiten Paar von nichtlenkbaren Rädern (131, 132, 141, 142) eine Lenkgeometrie des Fahrzeugs (101) zu bestimmen, und
basierend auf wenigstens dem wenigstens einen erfassten Lenkwinkel ($\alpha$, $\alpha_1$, $\alpha_2$) und der bestimmten Lenkgeometrie des Fahrzeugs (101) den Lenkwinkel ($\beta_1$, $\beta_2$) von wenigstens jedem des zweiten Paars von lenkbaren Rädern (121, 122) zu steuern.

2. Radlenksystem nach Anspruch 1, **dadurch gekennzeichnet, dass** das Steuersystem (204) dazu konfiguriert ist, durch Bestimmen einer kinematischen Länge (X) des Fahrzeugs (101) die Lenkgeometrie des Fahrzeugs (101) zu bestimmen.

**3.** Radlenksystem nach einem der vorhergehenden Ansprüche, **dadurch gekennzeichnet, dass** das Steuersystem (204) dazu konfiguriert ist, durch Bestimmen einer Antriebsdrehmomentverteilung zwischen wenigstens dem ersten und dem zweiten Paar von nichtlenkbaren Rädern (131, 132, 141, 142) die Lenkgeometrie des Fahrzeugs (101) zu bestimmen.

**4.** Radlenksystem nach einem der vorhergehenden Ansprüche, **dadurch gekennzeichnet, dass** das Steuersystem (204) dazu konfiguriert ist, durch Erfassen einer Lenkkraft des zweiten Paars von lenkbaren Rädern (121, 122) die Lenkgeometrie des Fahrzeugs (101) zu bestimmen.

**5.** Radlenksystem nach einem der vorhergehenden Ansprüche, **dadurch gekennzeichnet, dass** das Steuersystem (204) dazu konfiguriert ist, durch temporäres Steuern eines Lenkaktuators (205, 207) des zweiten Paars von lenkbaren Rädern (121, 122), um es den zweiten Paar von lenkbaren Rädern (121, 122) zu ermöglichen, frei eine natürliche Winkelposition anzunehmen, und durch Erfassen der Winkelposition des zweiten Paars von lenkbaren Rädern (121, 122) die Lenkgeometrie des Fahrzeugs (101) zu bestimmen.

**6.** Radlenksystem nach einem der vorhergehenden Ansprüche, **dadurch gekennzeichnet, dass** das Steuersystem (204) dazu konfiguriert ist, durch Empfangen einer Information von einer Fahrzeugfahrereingabeeinrichtung (212), die eine einzigartige Lenkgeometrie des Fahrzeugs (101) unter wenigstens zwei unterschiedlichen auswählbaren vorgegebenen Lenkgeometrien des Fahrzeugs anzeigt, die Lenkgeometrie des Fahrzeugs (101) zu bestimmen.

**7.** Radlenksystem nach einem der vorhergehenden Ansprüche, **dadurch gekennzeichnet, dass** das Steuersystem (204) dazu konfiguriert ist, durch Erfassen einer Fahrzeugantriebskonfiguration unter wenigstens zwei unterschiedlichen vorgegebenen Antriebskonfigurationen, wobei jede Antriebskonfiguration einer einzigartigen vorgegebenen Lenkgeometrie zugeordnet ist, die Lenkgeometrie des Fahrzeugs (101) zu bestimmen.

**8.** Radlenksystem nach einem der vorhergehenden Ansprüche, **dadurch gekennzeichnet, dass** das Steuersystem (204) dazu konfiguriert ist, den Lenkwinkel ($\beta_1$, $\beta_2$) von wenigstens jedem des zweiten Paars von lenkbaren Rädern (121, 122) derart zu steuern, dass jedes lenkbare Rad (121, 122) des Fahrzeugs im Wesentlichen das gleiche Drehzentrum aufweist, um das sich das Fahrzeug herum drehen wird.

**9.** Radlenksystem nach einem der vorhergehenden Ansprüche, **dadurch gekennzeichnet, dass** das Steuersystem (204) dazu konfiguriert ist, basierend auf wenigstens der bestimmten Lenkgeometrie des Fahrzeugs (101) ein Verhältnis zwischen dem linken und dem rechten Lenkwinkel ($\alpha_1$, $\alpha_2$, $\beta_1$, $\beta_2$) von wenigstens einem Paar von lenkbaren Rädern (111, 112, 121, 122) einzustellen.

**10.** Radlenksystem nach einem der vorhergehenden Ansprüche, **dadurch gekennzeichnet, dass** wenigstens eines des ersten und des zweiten Paars von nichtlenkbaren Rädern (131, 132, 141, 142) mittels eines Radhebemechanismus anhebbar ist.

**11.** Radlenksystem nach einem der vorhergehenden Ansprüche, **dadurch gekennzeichnet, dass** sich das erste Paar von lenkbaren Rädern (111, 112) im vorderen Teil (102) des Fahrzeugs (101) befindet, und sich das zweite Paar von lenkbaren Rädern (121, 122) an einer Vorlaufachse, einer Nachlaufachse, einer Anhängerachse oder einer Lenkachse befindet, die hinter der ersten Lenkachse positioniert ist.

**12.** Fahrzeug zum Transportieren einer Last umfassend wenigstens ein erstes und ein zweites Paar von lenkbaren Rädern (111, 112, 121, 122) und ein erstes und ein zweites Paar von nichtlenkbaren Rädern (131, 132, 141, 142), **dadurch gekennzeichnet, dass** das Fahrzeug ferner ein Radlenksystem (200) nach einem der vorhergehenden Ansprüche 1 - 11 umfasst.

**13.** Verfahren zum Verbessern einer Manövrierbarkeit eines Fahrzeugs (101), das zum Transportieren einer Last geeignet ist, wobei das Fahrzeug (101) wenigstens ein erstes und ein zweites Paar von lenkbaren Rädern (111, 112, 121, 122) und ein erstes und ein zweites Paar von nichtlenkbaren Rädern (131, 132, 141, 142) umfasst, wobei das Verfahren umfasst
Erfassen eines Fahrzeuglenkwinkels ($\alpha$, $\alpha_1$, $\alpha_2$);
Bestimmen einer Lenkgeometrie des Fahrzeugs (101) durch Bestimmen einer Lastverteilung zwischen wenigstens dem ersten und dem zweiten Paar von nichtlenkbaren Rädern (131, 132, 141, 142); und
Steuern des Lenkwinkels ($\beta_1$, $\beta_2$) von wenigstens jedem des zweiten Paars von lenkbaren Rädern (121, 122) basierend auf wenigstens dem erfassten Lenkwinkel ($\alpha$, $\alpha_1$, $\alpha_2$) und der bestimmten Lenkgeometrie des Fahrzeugs (101).

**14.** Verfahren nach Anspruch 13, umfassend Bestimmen der Lenkgeometrie des Fahrzeugs durch Bestimmen einer kinematischen Länge (X) des Fahrzeugs (101).

**15.** Verfahren nach einem der Ansprüche 13 - 14, umfassend Bestimmen der Lenkgeometrie des Fahrzeugs (101) durch Bestimmen einer Antriebsdrehmomentverteilung zwischen wenigstens dem ersten und dem zweiten Paar von nichtlenkbaren Rädern (131, 132, 141, 142).

**16.** Verfahren nach einem der Ansprüche 13 - 15, umfassend Bestimmen der Lenkgeometrie des Fahrzeugs (101) durch Erfassen einer Lenkkraft des zweiten Paars von lenkbaren Rädern (121, 122).

**17.** Verfahren nach einem der Ansprüche 13 - 16, umfassend Bestimmen einer Lenkgeometrie des Fahrzeugs (101) durch Erfassen einer Fahrzeugantriebskonfiguration unter wenigstens zwei unterschiedlichen vorgegebenen Antriebskonfigurationen, wobei jede Antriebskonfiguration einer einzigartigen Lenkgeometrie zugeordnet ist.

**18.** Verfahren nach einem der Ansprüche 13 - 17, umfassend Bestimmen der Lenkgeometrie des Fahrzeugs (101) durch Empfangen einer Information von einer Fahrzeugfahrereingabeeinrichtung (212), die eine einzigartige Lenkgeometrie des Fahrzeugs unter wenigstens zwei unterschiedlichen auswählbaren vorgegebenen Lenkgeometrien des Fahrzeugs anzeigt.

**19.** Verfahren nach einem der Ansprüche 13 - 18, umfassend Einstellen eines Verhältnisses zwischen dem linken und dem rechten Lenkwinkel ($\beta_1$, $\beta_2$, $\alpha_1$, $\alpha2$) von wenigstens einem Paar von lenkbaren Rädern (111, 112, 121, 122) basierend auf wenigstens der bestimmten Lenkgeometrie des Fahrzeugs.

**20.** Verfahren nach einem der Ansprüche 13 - 19, umfassend Steuern des Lenkwinkel ($\beta_1$, $\beta_2$) von wenigstens jedem des zweiten Paars von lenkbaren Rädern (121, 122) derart, dass die Räder (121, 122) im Wesentlichen das gleiche Drehzentrum aufweisen, um das sich das Fahrzeug herum drehen wird.

**21.** Verfahren nach einem der Ansprüche 13 - 20, umfassend Bestimmen der Lenkgeometrie des Fahrzeugs durch:

temporäres Steuern eines Lenkaktuators (205, 207) des zweiten Paars von lenkbaren Rädern (121, 122), um es den zweiten Paar von lenkbaren Rädern (121, 122) zu ermöglichen, frei eine natürliche Winkelposition anzunehmen, und
Erfassen der Winkelposition ($\beta_1$, $\beta_2$) des zweiten Paars von lenkbaren Rädern (121, 122).

**22.** Computerprogramm umfassend Programmcodemittel zum Durchführen des Verfahrens nach den Ansprüchen 13 - 21, wenn das Programm durch einen Computer ausgeführt wird.

**23.** Computerlesbares Medium umfassend ein Computerprogramm, das bei Ausführung durch einen Computer das Verfahren nach den Ansprüchen 13 - 21 durchführt.

**24.** Steuereinheit (109) zum Steuern eines Fahrzeugs (101) zum Transportieren einer Last, wobei die Steuereinheit dazu konfiguriert ist, das Verfahren nach den Ansprüchen 13 - 21 durchzuführen.

**Revendications**

**1.** Système de direction de roues (200) pour commander un angle de braquage ($\beta_1$, $\beta_2$) d'une deuxième paire de roues orientables (121, 122) d'un véhicule (101) comprenant
au moins une première et une deuxième paire de roues orientables (111, 112, 121, 122) et une première et deuxième paire de roues non orientables (131, 132, 141, 142),
le véhicule étant approprié pour le transport d'une charge,
le système de direction de roues (200) comprenant
un dispositif de détection d'angle de braquage (201) pour détecter au moins un angle de braquage de véhicule ($\alpha$, $\alpha_1$, $\alpha_2$) ; et
un système de commande (204) configuré
pour déterminer une géométrie de direction du véhicule (101) en déterminant une répartition de charge entre au moins la première et deuxième paire de roues non orientables (131, 132, 141, 142), et
pour commander l'angle de braquage ($\beta_1$, $\beta_2$) d'au moins chacune de la deuxième paire de roues orientables (121, 122) sur la base au moins de l'angle de braquage détecté ($\alpha$, $\alpha_1$, $\alpha_2$) et de la géométrie de direction déterminée du véhicule (101).

**2.** Système de direction de roues selon la revendication 1, **caractérisé en ce que** le système de commande (200) est configuré pour déterminer la géométrie de direction du véhicule (101) en déterminant une longueur cinématique (X) du véhicule (101).

**3.** Système de direction de roues selon l'une des revendications précédentes, **caractérisé en ce que** le système de commande (204) est configuré pour déterminer la géométrie de direction du véhicule (101) en déterminant une répartition de couple moteur entre au moins la première et deuxième paire de roues non orientables (131, 132, 141, 142).

**4.** Système de direction de roues selon l'une des revendications précédentes, **caractérisé en ce que** le système de commande (204) est configuré pour déterminer la géométrie de direction du véhicule (101) en détectant une force de direction de la deuxième paire de roues orientables (121, 122).

**5.** Système de direction de roues selon l'une des revendications précédentes, **caractérisé en ce que** le système de commande (204) est configuré pour déterminer la géométrie de direction du véhicule (101) en commandant temporairement un actionneur de direction (205, 207) de la deuxième paire de roues orientables (121, 122) pour permettre à la deuxième paire de roues orientables (121, 122) d'adopter librement une position angulaire naturelle, et en détectant ladite position angulaire de ladite deuxième paire de roues orientables (121, 122).

**6.** Système de direction de roues selon l'une des revendications précédentes, **caractérisé en ce que** le système de commande (204) est configuré pour déterminer la géométrie de direction du véhicule (101) en recevant des informations à partir d'un moyen d'entrée de conducteur de véhicule (212) qui indiquent une géométrie de direction unique du véhicule (101) parmi au moins deux différentes géométries de direction prédéterminées pouvant être sélectionnées du véhicule.

**7.** Système de direction de roues selon l'une des revendications précédentes, **caractérisé en ce que** le système de commande (204) est configuré pour déterminer la géométrie de direction du véhicule (101) en détectant une configuration de conduite de véhicule parmi au moins deux différentes configurations de conduite prédéterminées, où chaque configuration de conduite est associée à une géométrie de direction prédéterminée unique.

**8.** Système de direction de roues selon l'une des revendications précédentes, **caractérisé en ce que** le système de commande (204) est configuré pour commander l'angle de braquage ($\beta_1$, $\beta_2$) d'au moins chacune de la deuxième paire de roues orientables (121, 122) de sorte que chaque roue orientable (121, 122) du véhicule ait essentiellement le même centre de rotation autour duquel le véhicule tournera.

**9.** Système de direction de roues selon l'une des revendications précédentes, **caractérisé en ce que** le système de commande (204) est configuré pour ajuster un rapport entre l'angle de braquage gauche et droit ($\alpha_1$, $\alpha_2$, $\beta_1$, $\beta_2$) d'au moins une paire de roues orientables (111, 112, 121, 122) sur la base au moins de la géométrie de direction déterminée du véhicule (101).

**10.** Système de direction de roues selon l'une des revendications précédentes, **caractérisé en ce qu'**au moins l'une de la première et deuxième paire de roues non orientables (131, 132, 141, 142) peut être soulevée au moyen d'un mécanisme de levage de roues.

**11.** Système de direction de roues selon l'une des revendications précédentes, **caractérisé en ce que** la première paire de roues orientables (111, 112) est située dans la partie avant (102) du véhicule (101), et la deuxième paire de roues orientables (121, 122) est située sur un essieu poussé, un essieu traîné, un essieu de remorque ou un essieu directeur positionné vers l'arrière du premier essieu directeur.

**12.** Véhicule pour transporter une charge comprenant au moins une première et une deuxième paire de roues orientables (111, 112, 121, 122) et une première et deuxième paire de roues non orientables (131, 132, 141, 142), **caractérisé en ce que** le véhicule comprend en outre un système de direction de roues (200) selon l'une des revendications précédentes 1 à 11.

**13.** Procédé pour améliorer la manoeuvrabilité d'un véhicule (101) approprié pour le transport d'une charge, le véhicule (101) comprenant au moins une première et une deuxième paire de roues orientables (111, 112, 121, 122) et une première et deuxième paire de roues non orientables (131, 132, 141, 142), le procédé comprenant le fait de détecter un angle de braquage de véhicule ($\alpha$, $\alpha_1$, $\alpha_2$) ; de déterminer une géométrie de direction du véhicule (101) en déterminant une répartition de charge entre au moins la première et deuxième paire de roues non orientables (131, 132, 141, 142) ; et de commander l'angle de braquage ($\beta_1$, $\beta_2$) d'au moins chacune de la deuxième paire de roues orientables (121, 122) sur la base au moins de l'angle de braquage détecté ($\alpha$, $\alpha_1$, $\alpha_2$) et de la géométrie de direction déterminée du véhicule (101).

**14.** Procédé selon la revendication 13, comprenant le fait de déterminer la géométrie de direction du véhicule en déterminant une longueur cinématique (X) du véhicule (101).

**15.** Procédé selon l'une des revendications 13 et 14, comprenant le fait de déterminer la géométrie de direction du véhicule (101) en déterminant une répartition de couple moteur entre au moins la première et deuxième paire de roues non orientables (131, 132, 141, 142).

**16.** Procédé selon l'une des revendications 13 à 15, comprenant le fait de déterminer la géométrie de direction du véhicule (101) en détectant une force de direction de la deuxième paire de roues orientables (121, 122).

**17.** Procédé selon l'une des revendications 13 à 16, comprenant le fait de déterminer une géométrie de direction du véhicule (101) en détectant une configuration de conduite de véhicule parmi au moins deux différentes configurations de conduite prédéterminées, où chaque configuration de conduite est associée à une géométrie de direction unique.

**18.** Procédé selon l'une des revendications 13 à 17, comprenant le fait de déterminer la géométrie de direction du véhicule (101) en recevant des informations à partir d'un moyen d'entrée de conducteur de véhicule (212), qui indiquent une géométrie de direction unique du véhicule parmi au moins deux différentes géométries de direction prédéterminées pouvant être sélectionnées du véhicule.

**19.** Procédé selon l'une des revendications 13 à 18, comprenant le fait d'ajuster un rapport entre l'angle de braquage gauche et droit ($\beta_1$, $\beta_2$, $\alpha_1$, $\alpha_2$) d'au moins une paire de roues orientables (111, 112, 121, 122) sur la base au moins de la géométrie de direction déterminée du véhicule.

**20.** Procédé selon l'une des revendications 13 à 19, comprenant le fait de commander l'angle de braquage ($\beta_1$, $\beta_2$) d'au moins chacune de la deuxième paire de roues orientables (121, 122) de sorte que lesdites roues (121, 122) aient essentiellement le même centre de rotation autour duquel le véhicule tournera.

**21.** Procédé selon l'une des revendications 13 à 20, comprenant le fait de déterminer la géométrie de direction du véhicule :

en commandant temporairement un actionneur de direction (205, 207) de la deuxième paire de roues orientables (121, 122) pour permettre à la deuxième paire de roues orientables (121, 122) d'adopter librement une position angulaire naturelle, et en détectant ladite position angulaire ($\beta_1$, $\beta_2$) de ladite deuxième paire de roues orientables (121, 122).

**22.** Programme informatique comprenant un moyen de code de programme pour mettre en oeuvre le procédé des revendications 13 à 21 lorsque ledit programme est exécuté par un ordinateur.

**23.** Support lisible par ordinateur comprenant un programme informatique qui, lorsqu'il est exécuté par un ordinateur, met en oeuvre le procédé des revendications 13 à 21.

**24.** Unité de commande (109) pour commander un véhicule (101) pour le transport d'une charge, l'unité de commande étant configurée pour mettre en oeuvre le procédé des revendications 13 à 21.

FIG. 1

FIG. 2

FIG. 3

FIG. 4

FIG. 5

FIG. 6

FIG. 7

FIG. 8

FIG. 9

FIG. 10

FIG. 11

FIG. 12

**EP 3 060 453 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080269986 A
- US 2007216134 A